(19) Europäisches Patentamt
European Patent Office
Office européen des brevets

(11) EP 1 070 101 B1

(12) # EUROPÄISCHE PATENTSCHRIFT

(45) Veröffentlichungstag und Bekanntmachung des Hinweises auf die Patenterteilung:
**03.09.2003 Patentblatt 2003/36**

(21) Anmeldenummer: **99911795.5**

(22) Anmeldetag: **15.03.1999**

(51) Int Cl.[7]: **C09D 5/02**, C09D 17/00, C09D 7/12, C09D 151/00

(86) Internationale Anmeldenummer:
**PCT/EP99/01690**

(87) Internationale Veröffentlichungsnummer:
**WO 99/047611 (23.09.1999 Gazette 1999/38)**

(54) **ITAKONSÄURE-HALTIGE DISPERSIONSHARZE ZUR VERBESSERUNG DER NASSABRIEBSFESTIGKEIT**

DISPERSION RESINS CONTAINING ITACONIC ACID FOR IMPROVING WET ABRASION RESISTANCE

RESINES DE DISPERSION CONTENANT DE L'ACIDE ITACONIQUE ET PERMETTANT D'AUGMENTER LA RESISTANCE A L'ABRASION HUMIDE

(84) Benannte Vertragsstaaten:
**DE ES FR GB IT NL SE**

(30) Priorität: **16.03.1998 DE 19811314**

(43) Veröffentlichungstag der Anmeldung:
**24.01.2001 Patentblatt 2001/04**

(73) Patentinhaber: **BASF AKTIENGESELLSCHAFT**
**67056 Ludwigshafen (DE)**

(72) Erfinder:
- **ZHAO, Cheng-Le**
  **D-68723 Schwetzingen (DE)**
- **ROSER, Joachim**
  **B-1180 Brüssel (BE)**
- **DERSCH, Rolf**
  **D-67434 Neustadt (DE)**
- **BAUMSTARK, Roland**
  **D-67434 Neustadt (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 773 245**
**DE-A- 2 232 710**
**DE-A- 2 418 849**
**DE-A- 2 726 806**
**US-A- 5 175 205**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 070 101 B1

## Beschreibung

Die vorliegende Erfindung betrifft pigmenthaltige wässrige Zubereitungen, die wenigstens eine wässrige Polymerisatdispersion enthalten.

Pigmenthaltige Zubereitungen finden als Beschichtungsmassen, insbesondere Dispersionsfarben, kunstharzgebundene Putze (Dispersionsputze), Dichtungsmassen oder als Spachtelmassen zu Zwecken des Bautenschutzes oder zu dekorativen Zwecken breite Verwendung. Pigmenthaltige Zubereitungen enthalten in der Regel als Bindemittel ein filmbildendes Polymer, wenigstens ein anorganisches Pigment und gegebenenfalls einen oder mehrere anorganische Füllstoffe sowie übliche Hilfsmittel. Die Qualität der Beschichtungen von pigmentierten Zubereitungen hängt maßgeblich von der Fähigkeit des filmbildenden Polymers ab, die nichtfilmbildenden Bestandteile, die Pigmente und anorganische Füllstoffe gleichmäßig zu binden.

Ein geringes Pigmentbindevermögen führt zu einer schlechten mechanischen Stabilität der Beschichtung, die sich beispielsweise in einer geringen Nassabriebfestigkeit bzw. Scheuerfestigkeit äußert. Eine hohe Nassabriebfestigkeit ist jedoch insbesondere bei waschbeständige Dispersionsfarben erwünscht.

Das Pigmentbindevermögen des Bindemittels spielt eine besonders wichtige Rolle bei Zubereitungen mit einem mittleren bis hohen Gehalt an anorganischen Pigmenten und Füllstoffen. Eine charakteristische Größe für den Pigmentgehalt einer polymergebundenen Beschichtungsmasse ist die Pigmentvolumenkonzentration PVK. Die Pigmentvolumenkonzentration wird üblicherweise definiert als der Quotient aus dem Gesamtvolumen der festen anorganischen Bestandteile (Pigment + Füllstoffe), geteilt durch das Gesamtvolumen der festen anorganischen Bestandteile und der Polymerisatteilchen der wässrigen Bindemittelpolymerisatdispersion in %; siehe Ullmann's Enzyklopädie der technischen Chemie, 4. Auflage, Band 15, S. 668.

Die Beschichtungsmassen sollten insbesondere bei Anwendungen im Außenbereich gegenüber Umwelteinflüssen, wie Sonnenlicht, Feuchtigkeit und Temperaturschwankungen stabil sein. Ferner muss die Beschichtungsmasse auch bei Einwirkung von Feuchtigkeit auf unterschiedlichen Substraten gut haften, was ebenfalls vom gewählten Bindemittelpolymer abhängt.

Eine weitere, vom Bindemittelpolymer abhängige Eigenschaft ist die Blockfestigkeit der Beschichtungen.

Aus der WO 93/11181 sind Titandioxid enthaltende Zubereitungen bekannt, die als Dispergierhilfsmittel wässrige Polymerisatdispersionen enthalten, deren Polymerisate Itaconsäure in einer Menge von mehr als 1 Gew.-%, bezogen auf das Gewicht des Polymerisats, einpolymerisiert enthalten. Die Nassabriebfestigkeit der dort offenbarten Dispersionen lässt zu wünschen übrig.

Aus der EP-A-810 274 sind Bindemittel für lösungsmittelfreie Beschichtungsmassen bekannt, die Säuregruppen enthaltende Monomere in einer Menge von bis zu 1 Gew.-%, bezogen auf das Gesamtgewicht der zu polymerisierenden Monomere, einpolymerisiert enthalten können.

Die Bindemittel des Standes der Technik vermögen die Forderungen, die an Beschichtungsmassen gestellt werden, nur teilweise zu erfüllen. Der vorliegenden Erfindung liegt daher die Aufgabe zugrunde, pigmenthaltige Zubereitungen bereitzustellen, die ein hohes Pigmentbindevermögen, d.h. eine hohe Nassabriebfestigkeit oder Nassscheuerfestigkeit aufweisen. Diese Eigenschaften müssen auch bei höheren Pigmentvolumenkonzentrationen, d. h. PVK > 40% gewahrt bleiben. Auch sollten die Zubereitungen lagerstabil sein, d. h. ihre Viskosität sollte auch bei längerer Lagerung nicht oder nur unwesentlich zunehmen.

Diese Aufgabe konnte überraschenderweise gelöst werden, wenn man für die Zubereitungen Bindemittel auf der Basis wässriger Polymerisatdispersionen verwendet, deren Polymere 0,1 bis 1,5 Gew.-% Itaconsäure einpolymerisiert enthalten.

Demnach betrifft die vorliegende Erfindung pigmenthaltige, wässrige Zubereitung, enthaltend

i) wenigstens ein Copolymer P ethylenisch ungesättigter Monomere M in Form einer wässrigen Polymerisatdispersion, das 0,1 bis 1,5 Gew.-%, bezogen auf das Gesamtgewicht des Copolymeren P, Itaconsäure als saures Monomer M1, deren Salze und/oder deren Anhydrid einpolymerisiert enthält, wobei bis zu 50 Gew.-% der Itaconsäure durch ein anderes Monomer mit wenigstens einer Säuregruppe oder einer neutralisierten Säuregruppe ersetzt sein können, und das eine Glasübergangstemperatur $T_G$ im Bereich von -10 bis +50 °C aufweist,

ii) wenigstens ein anorganisches Pigment,

iii) gegebenenfalls anorganische Füllstoffe und

iv) übliche Hilfsmittel.

Vorzugsweise umfassen die Monomere M, aus denen das Copolymer P aufgebaut ist 0,2 bis 1,2 Gew.-%, insbesondere 0,2 bis 1,0 Gew.-% und besonders bevorzugt 0,4 bis 1,0 Gew.-%. In einer ganz besonders bevorzugten

Ausführungsform umfassen die Monomere M 0,5 bis 0,9 und speziell 0,5 bis 0,8 Gew.-% Itaconsäure als saures Monomer M1. Anstelle von Itaconsäure kann auch deren Anhydrid oder deren Salze bei der Herstellung der Copolymere P eingesetzt werden. Ein gewisser Teil der Itaconsäure, d.h. bis zu 50 Gew.-%, vorzugsweise jedoch nicht mehr als 25 Gew.-% und insbesondere nicht mehr als 10 Gew.-%, kann durch ein anderes Monomer mit wenigstens einer Säuregruppe, z.B. durch eine ethylenisch ungesättigte Carbonsäure wie Acrylsäure oder Methacrylsäure oder eine ethylenisch ungesättigte Sulfonsäure, z.B. Vinylsulfonsäure oder deren Salze, ersetzt werden. Typische Salze sind die Alkalimetall- und Ammoniumsalze, vorzugsweise die Natriumsalze. Besonderes bevorzugt wird Itaconsäure als alleiniges saures Monomer (Monomer M1 eingesetzt.

Üblicherweise erfolgt die Herstellung der Itaconsäure enthaltenden Copolymere P durch radikalische Polymerisation ethylenisch ungesättigter Monomere M, die neben Itaconsäure wenigstens ein weiteres Comonomer umfassen. Geeignete Comonomere sind in der Regel ausgewählt unter vinylaromatischen Monomeren, wie Styrol, $\alpha$-Methylstyrol, o-Chlorstyrol oder Vinyltoluole, den Vinylestern von aliphatischen $C_1$-$C_{18}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von $\alpha$-verzweigten, aliphatischen Carbonsäuren mit X C-Atomen, die auch als Versatic® X-Säuren bezeichnet werden) sowie den Estern ethylenisch ungesättigter $C_3$-$C_8$-Mono- oder Dicarbonsäuren mit $C_1$-$C_{18}$-, vorzugsweise $C_1$-$C_{12}$- und insbesondere $C_1$-$C_8$-Alkanolen oder $C_5$-$C_8$-Cycloalkanolen. Geeignete $C_1$-$C_{18}$-Alkanole sind beispielsweise Methanol, Ethanol, n-Propanol, i-Propanol, 1-Butanol, 2-Butanol, Isobutanol, tert.-Butanol, n-Hexanol, 2-Ethylhexanol, Laurylalkohol und Stearylalkohol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich um die Ester der Acrylsäure und/oder der Methacrylsäure, wie (Meth)acrylsäuremethylester, (Meth)acrylsäureethylester, (Meth)acrylsäureisopropylester, (Meth)acrylsäure-n-butylester, (Meth)acrylsäureisobutylester, (Meth)acrylsäure-1-hexylester, (Meth)acrylsäure-tert.-butylester, (Meth)acrylsäure-2-ethylhexylester, sowie ferner um die Ester der Fumarsäure und der Maleinsäure, z. B. Fumarsäuredimethylester, Maleinsäuredimethylester oder Maleinsäuredi-n-butylester. Weiterhin kommen Nitrile a,$\beta$-monoethylenisch ungesättigter $C_3$-$C_8$-Carbonsäuren, wie Acrylnitril oder Methacrylnitril in Betracht. Darüber hinaus können auch $C_4$-$C_8$-konjugierte Diene, wie 1,3-Butadien, Isopren oder Chloropren, $\alpha$-Olefine, wie Ethylen, Propen und Isobuten sowie Vinylchlorid oder Vinylidenchlorid als Comonomere eingesetzt werden.

Vorzugsweise umfassen die Monomere M neben der Itaconsäure 50 bis 99,9 Gew.-%, bezogen auf das Gesamtgewicht des Copolymers P wenigstens eines Monomers M2, das ausgewählt ist unter den oben genannten vinylaromatischen Monomeren, den vorgenannten Estern ethylenisch ungesättigter $C_3$-$C_8$-Monocarbonsäuren mit $C_1$-$C_{12}$-Alkanoien sowie den Vinylestern aliphatischer $C_1$-$C_{12}$-Monocarbonsäuren. In einer bevorzugten Ausführungsform der vorliegenden Erfindung sind die Monomere M2 ausgewählt unter den $C_1$-$C_{12}$-Alkylestern der Acrylsäure und $C_1$-$C_{12}$-Alkylestern der Methacrylsäure, insbesondere Methylmethacrylat, Ethylmethacrylat, n-Butylmethacrylat, tert.-Butylmethacrylat, Ethylacrylat, n-Butylacrylat, tert.-Butylacrylat und 2-Ethylhexylacrylat. Die Monomere M2 machen, bezogen auf die Gesamtmonomermenge, vorzugsweise wenigstens 80 Gew.-% und insbesondere wenigstens 90 Gew.-% aus. Die übrigen der vorgenannten Comonomere (im Folgenden als Comonomere M' bezeichnet) werden in der Regel in Mengen < 50 Gew.-%, vorzugsweise < 20 Gew.-% und insbesondere < 10 Gew.-%, bezogen auf die Gesamtmenge der Monomere M, verwendet. Eine bevorzugte Ausführungsform dieser Erfindung betrifft Copolymere P, die keines der vorgenannten Comonomere M' einpolymerisiert enthalten.

In einer bevorzugten Ausführungsform der Erfindung enthalten die Copolymere P Monomere M3 einpolymerisiert, die Harnstoffgruppen aufweisen (Monomere M3), z. B. N-Vinyl- und N-Allylharnstoff und Derivate des Imidazolidin-2-ons, z. B. N-Vinyl- und N-Allylimidazolidin-2-on, N-Vinyloxyethylimidazolidin-2-on, N-(2-(Meth)acrylamidoethyl) imidazolidin-2-on, N-(2-(Meth)acryloxyethyl)imidazolidin-2-on, N-[2-((Meth)acryloxyacetamido)ethyl]imidazolidin-2-on etc. Die Monomere M3 werden vorzugsweise in Mengen von 0,1 bis 10 Gew.-%, insbesondere 0,5 bis 5 Gew.-%, bezogen auf das Gesamtgewicht des Copolymeren P, verwendet. Die Monomere M3 verbessern die Nasshaftung der aus den erfindungsgemäßen Zubereitungen erhältlichen Beschichtungen, d.h. die Haftung der Beschichtung in feuchtem oder gequollenem Zustand.

Die Copolymere P können auch Siloxangruppen enthaltende Monomere (Monomere M4) einpolymerisiert enthalten, z.b. Vinyltrialkoxysilane, wie Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan. Die Monomere M4 können in Mengen von bis zu 1 Gew.-%, vorzugsweise 0,05 bis 0,5 Gew.-%, bezogen auf die Gesamtmonomermenge, verwendet werden.

Ferner kann das Copolymer P auch neutrale oder nichtionische Monomere M5 einpolymerisiert enthalten, deren Homopolymerisate eine erhöhte Wasserlöslichkeit oder Wasserquellbarkeit aufweisen. Diese Monomere werden vorzugsweise in Mengen von < 5 Gew.-% und vorzugsweise < 2 Gew.-%, bezogen auf Gesamtgewicht des Copolymeren P, mit einpolymerisiert. Derartige Monomere verbessern die Stabilität der Polymerisatdispersionen. Typische Monomere M5 sind die Amide, die N-Alkylolamide oder die Hydroxyalkylester der genannten Carbonsäuren wie Acrylamid, Methacrylamid, N-Methylolacrylamid, N-Methylolmethacrylamid, 2-Hydroxyethylacrylamid, 2-Hydroxyethylmethacrylamid, Hydroxyethylacrylat, Hydroxyethylmethacrylat, Hydroxypropylacrylat und Hydroxypropylmethacrylat.

Weiterhin können bifunktionelle Monomere M6 bei der Herstellung der Copolymere P eingesetzt werden. Diese werden, sofern erwünscht, in untergeordneter Menge, in der Regel 0,1 bis 5 Gew.-% und insbesondere nicht mehr als 1 Gew.-%, bezogen auf die Gesamtmonomermenge, mit einpolymerisiert. Hierbei handelt es sich vorzugsweise um Monomere, die zwei nicht-konjugierte, ethylenisch ungesättigte Bindungen aufweisen, z. B. die Diester zweiwertiger Alkohole mit a,β-monoethylenisch ungesättigten $C_3$-$C_8$-Carbonsäuren, z. B. Glykolbisacrylat oder Ester von α,β-ungesättigten Carbonsäuren mit Alkenolen, z. B. Bicyclodecenyl(meth)acrylat. Bevorzugte Polymerisate P enthalten keine Monomere M6 einpolymerisiert.

Weiterhin hängt die Eigenschaft der erfindungsgemäßen Zubereitungen von der Glasübergangstemperatur (DSC, midpoint temperature, ASTM D 3418-82) des Copolymere P ab. Ist diese zu niedrig, weist die Beschichtung nur eine geringe Festigkeit auf und reißt bei mechanischer Belastung aus. Ist sie zu hoch, verfilmt das Polymerisat nicht mehr. Als Folge weist die Beschichtung eine verringerte Nassabriebfestigkeit auf. Die Glasübergangstemperatur der in Frage kommenden Copolymere P liegt daher unterhalb 50 °C und vorzugsweise unterhalb 40 °C, insbesondere unterhalb 30 °C. Im Allgemeinen liegt sie jedoch oberhalb -10 °C. Hierbei erweist es sich als hilfreich, die Glasübergangstemperatur $T_g$ des dispergierten Polymerisats abzuschätzen. Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^{\,1}} + \frac{X^2}{T_g^{\,2}} + \ldots.. \frac{X^n}{T_g^{\,n}}$$

wobei $X^1, X^2, \ldots, X^n$ die Massenbrüche der Monomere 1, 2, ..., n und $T_g^1, T_g^2, \ldots, T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Aus dem Gesagten wird deutlich, dass die Glastemperatur des Copolymers P sowohl durch Wahl eines geeigneten Hauptmonomers M2, das eine Glasübergangstemperatur im gewünschten Bereich aufweist, als auch durch Kombination wenigstens eines Monomers M2a mit hoher Glasübergangstemperatur und wenigstens eines Monomers M2b mit niedriger Glasübergangstemperatur eingestellt werden kann, wobei letztere Vorgehensweise bevorzugt ist.

In einer bevorzugten Ausführungsform der vorliegenden Erfindung umfassen die das Copolymer P konstituierenden Monomere M wenigstens ein Monomer M2a, dessen Homopolymerisat im Grenzfall einer sehr hohen (unendlichen) Molmasse eine Glasübergangstemperatur $T_g > 30$ °C aufweist, und wenigstens ein Monomer M2b, dessen Homopolymerisat eine Glasübergangstemperatur $T_g < 20$ °C aufweist. Für diesen Zweck geeignete Monomere M2a sind beispielsweise Styrol, α-Methylstyrol, Methylmethacrylat, Ethylmethacrylat, n- und isoPropylmethacrylat, n-, iso- und tert.-Butylmethacrylat, tert.-Butylacrylat und Vinylacetat, ferner Acrylnitril und Methacrylnitril, wobei die beiden Nitrile vorzugsweise nicht mehr als 30 Gew.-% der Monomere M2a ausmachen. Für diesen Zweck geeignete Monomere M2b sind z. B. die $C_1$-$C_{12}$-Alkylacrylate, Butadien, Vinylversatate, insbesondere Ethylacrylat, n-Butylacrylat und 2-Ethylhexylacrylat. Besonders bevorzugt werden Monomerkombinationen M2a/M2b, die Styrol und/oder Methylmethacrylat sowie n-Butylacrylat und gegebenenfalls 2-Ethylhexylacrylat umfassen.

In einer besonders bevorzugten Ausführungsform der vorliegenden Erfindung ist das Copolymer P aufgebaut aus:

i) 20 bis 80 Gew.-%, vorzugsweise 35 bis 70 Gew.-% Monomeren M2a, insbesondere Styrol und/oder Methylmethacrylat, speziell Methylmethacrylat als alleiniges Monomer M2a,

ii) 20 bis 79,7 Gew.-%, vorzugsweise 30 bis 65 Gew.-% Monomeren M2b, insbesondere n-Butylacrylat und/oder Ethylhexylacrylat,

iii) 0,1 bis 1,5 Gew.-%, vorzugsweise 0,2 bis 1,2 Gew.-%, insbesondere 0,3 bis 1,0 Gew.-% und besonders bevorzugt 0,5 bis 0,8 Gew.-% Itaconsäure,

iv) 0,2 bis 5 Gew.-%, vorzugsweise 0,5 bis 3 Gew.-% Monomeren M3 mit wenigstens einer Harnstoffgruppe, insbesondere ein ethylenisch ungesättigtes Derivat des Imidazolidin-2-ons,

wobei sich die Gewichtsteile der Monomere M1, M2a, M2b und M3 zu 100 Gew.-% addieren. Derartige Copolymere P werden häufig in erfindungsgemäßen Zubereitungen eingesetzt, die Lösungsmittel enthalten.

In einer anderen bevorzugten Ausführungsform der vorliegenden Erfindung ist das Copolymer P aufgebaut aus

i) 20 bis 69,7 Gew.-%, vorzugsweise 30 bis 60 Gew.-% Monomeren M2a, insbesondere Styrol und/oder Methylmethacrylat-und speziell Styrol als alleiniges Monomer M2a,

ii) 30 bis 80 Gew.-%, vorzugsweise 40 bis 70 Gew.-% Monomeren M2b, insbesondere n-Butylacrylat und/oder Ethylhexylacrylat,

iii) 0,2 bis 1 Gew.-%, vorzugsweise 0,4 bis 0,9 Gew.-%, insbesondere 0,5 bis 0,8 Gew.-% Itaconsäure,

iv) 0,1 bis 3 Gew.-%, insbesondere 0,2 bis 2 Gew.-% Monomere M5, insbesondere Acrylamid und/oder Methacrylamid,

wobei sich die Gewichtsteile der Monomere M1, M2a, M2b und M5 zu 100 Gew.-% addieren. Derartige Copolymere P werden häufig in erfindungsgemäßen, lösungsmittelfreien Zubereitungen eingesetzt.

Selbstverständlich können die Copolymere P der beiden bevorzugten Ausführungsformen mit Siloxangruppen modifiziert sein, beispielsweise durch einpolymerisierte Monomere M4 (s. o.) oder durch Verwendung Siloxangruppen enthaltender Regler, z. B. Mercaptoalkyltrialkoxysilane wie Mercaptopropyltrimethoxysilan.

Ferner hat es sich als vorteilhaft erwiesen, wenn die Polymerisatteilchen in der Bindemittelpolymerisatdispersion einen gewichtsmittleren Polymerisatteilchendurchmesser im Bereich von 50 bis 1000 nm (bestimmt mittels Ultrazentrifuge oder Photonenkorrelationsspektroskopie; zur Teilchengrößenbestimmung mittels Ultrazentrifuge siehe z. B. W. Mächtle, Makromolekulare Chemie, 1984, Bd. 185, 1025-1039, W. Mächtle, Angew. Makromolekulare Chemie, 1988, 162, 35-42) aufweisen. Bei Bindemitteldispersionen mit hohen Feststoffgehalten, z. B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion > 250 nm ist. Der mittlere Teilchendurchmesser wird in der Regel 1 000 nm und vorzugsweise 600 nm nicht überschreiten.

Die Herstellung der erfindungsgemäß zur Anwendung kommenden wässrigen Polymerisatdispersionen erfolgt vorzugsweise durch radikalische wässrige Emulsionspolymerisation der genannten Monomere in Gegenwart wenigstens eines radikalischen Polymerisationsinitiators und gegebenenfalls einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate als auch um Azoverbindungen handeln. Als Polymerisationsinitiatoren werden häufig sog. Redoxinitiatoren verwendet, die aus wenigstens einem organischen Reduktionsmittel und wenigstens einem Peroxid und/oder Hydroperoxid zusammengesetzt sind, z. B. tert.-Butylhydroperoxid mit Schwefelverbindungen, z. B. dem Natriumsalz der Hydroxymethansulfinsäure, Natriumsulfit, Natriumdisulfit, Natriumthiosulfat oder Acetonbisulfit-Addukt oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z. B. Ascorbinsäure/Eisen(II)sulfat/Wasserstoffperoxid, wobei anstelle von Ascorbinsäure auch häufig das Natriumsalz der Hydroxymethansulfinsäure, Acetonbisulfit-Addukt, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1,0 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$), weiterhin Verbindungen der allgemeinen Formel I,

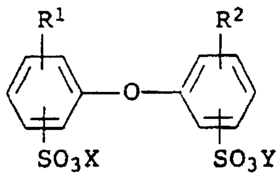

(I)

worin $R^1$ und $R^2$ Wasserstoff oder $C_4$-$C_{24}$-Alkyl, vorzugseise $C_8$-$C_{16}$-Alkyl bedeuten und nicht gleichzeitig Wasserstoff sind, und X und Y Alkalimetallionen und/oder Ammoniumionen sein können. Häufig werden technische Gemische verwendet, die einen Anteil von 50 bis 90 Gew.-% des monoalkylierten Produktes aufweisen, beispielsweise Dowfax® 2A1 ($R^1$ = $C_{12}$-Alkyl; DOW CHEMICAL). Die Verbindungen I sind allgemein bekannt, z. B. aus der US-A-4,269,749, und im Handel erhältlich.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxilierungsgrad von 8 bis 50. Bevorzugt werden anionische Emulgatoren oder Kombinationen aus wenigstens einem anionischen und einem nichtionischen Emulgator.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Das Molekulargewicht der Copolymere P kann durch Zugabe geringer Mengen, in der Regel bis zu 2 Gew.-%, bezogen auf die zu polymerisierenden Monomere, einer oder mehrerer, das Molekulargewicht regelnder Substanzen, 2. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Bei halbkontinuierlichen Verfahren wird die Hauptmenge, d.h. wenigstens 70 %, vorzugsweise wenigstens 90 % der zu polymerisierenden Monomere kontinuierlich, einschließlich Stufen- oder Gradientenfahrweise, dem Polymerisationsansatz zugeführt. Diese Vorgehensweise wird auch als Monomerzulaufverfahren bezeichnet. Hierbei hat es sich als vorteilhaft erwiesen, wenn die Hauptmenge der Itaconsäure, d.h. wenigstens 50 %, vorzugsweise wenigstens 80 %, insbesondere wenigstens 90 % und ganz besonders bevorzugt die Gesamtmenge der Itaconsäure der Polymerisationsreaktion über den Monomerzulauf zugeführt werden, d.h. nicht mehr als 50 % der Itaconsäure und ganz besonders bevorzugt keine Itaconsäure bereits vor Beginn der Polymerisation im Polymerisationsgefäß vorgelegt werden. Unter Monomerzulauf versteht man flüssige Monomermischungen, Monomerlösungen oder insbesondere wäßrige Monomeremulsionen.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie 'Encyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,02 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt.

Die Herstellung der wässrigen Dispersionen der Copolymere P kann auch durch sogenannte Stufenpolymerisation hergestellt werden. Hierunter versteht man eine Vorgehensweise, bei der man in einer 1. Stufe die Monomere der 1. Stufe auf dem Wege einer radikalischen, wässrigen Emulsionspolymerisation, vorzugsweise in Gegenwart eines Saatlatex, polymerisiert und anschließend in der wässrigen Dispersion des so erhältlichen Polymerisats der 1. Stufe die Monomere der 2. Stufe polymerisiert. Gegebenenfalls können weitere Polymerisationsstufen folgen. Hierbei unterscheiden sich die Monomermischungen der 1. Stufe und der 2. Stufe hinsichtlich der Art der Monomere und/oder in den relativen Mengen der Monomere zueinander. Vorzugsweise ist die Art der zu polymerisierenden Monomere in der 1. und der 2. Stufe gleich. Umfassen die Monomere M sowohl ein Monomer M2a und ein Monomer M2b, dann unterscheiden sich die Monomermischungen der 1. Stufe von den Monomermischungen der 2. Stufe durch das Mengenverhältnis M2a/M2b. Insbesondere ist das Verhältnis M2a/M2b in der 1. Stufe größer als das Verhältnis M2a/M2b in der 2. Stufe. Das Mengenverhältnis der Monomere der 1. Stufe zu den Monomeren der 2. Stufe liegt vorzugsweise im Bereich von 1:10 bis 10:1 und insbesondere im Bereich von 1:5 bis 5:1. Durch die Stufenpolymerisation erreicht man, dass die Monomere der 2. Stufe (und gegebenenfalls der Folgestufen) auf die Polymerteilchen der 1. Stufe aufpolymerisiert werden.

Polymerisationsdruck und Polymerisationstemperatur sind von untergeordneter Bedeutung. Im Allgemeinen

arbeitet man bei Temperaturen zwischen Raumtemperatur und 120 °C, vorzugsweise bei Temperaturen von 40 bis 95 °C und besonders bevorzugt zwischen 50 und 90°C.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423 aufgeführt sind, erfolgen. Bevorzugt wird die Nachpolymerisation mit einem Redoxinitiatorsystem aus wenigstens einem organischen Peroxid und einem organischen Sulfit durchgeführt.

5 Vorzugsweise werden die Dispersionen des Copoylmeren P vor ihrem Einsatz in den erfindungsgemäßen Zubereitungen, vorzugsweise duch Zugabe einer nichtflüchtigen Base, z.B. Alkalimetall- oder Erdalkalimetallhydroxiden oder nichtflüchtigen Aminen, auf einen pH-Wert im Bereich von pH 6 bis pH 10 eingestellt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die erfindungsgemäßen Zubereitungen Polymerisatdispersionen mit Feststoffgehaiten im Bereich von 40 bis 70 Gew.-% bevorzugt. Besonders bevorzugt werden Dispersionen mit Polymergehalten von etwa 50 Gew.-%. Natürlich sind auch Dispersionen mit geringeren Feststoffgehalten prinzipiell für die erfindungsgemäßen Zubereitungen einsetzbar.

Erfindungsgemäß werden die Itaconsäure enthaltenden Copolymere P in Form ihrer wässrigen Polymerisatdispersionen als Bindemittel in solchen pigmenthaltigen Zubereitungen eingesetzt, die zur Beschichtung von Substraten dienen. Hierunter versteht man beispielsweise Kunststoffdispersionsputze, Fliesenkleber, Anstrichmittel, Dichtmassen oder Versiegelungsmassen, insbesondere für poröse Bauteile.

Eine bevorzugte Ausführungsform der vorliegenden Erfindung betrifft Zubereitungen in Form von Dispersionsfarben.

Die erfindungsgemäßen Zubereitungen, vorzugsweise die Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa

i 3 bis 90 Gew.-%, vorzugsweise 10 bis 60 Gew.-%, auf feste Bindemittelbestandteile (= Copolymer P)

ii 5 bis 85 Gew.-%, vorzugsweise 10 bis 60 Gew.-%, auf wenigstens ein anorganisches Pigment,

iii 0 bis 85 Gew.-%, vorzugsweise 20 bis 70 Gew.-%, auf anorganische Füllstoffe und

iv 0,1 bis 40 Gew.-%, vorzugsweise 0,5 bis 15 Gew.-%, auf übli-5 che Hilfsmittel.

Die PVK der Zubereitungen liegt in der Regel oberhalb 10 %, z. B. 15 bis 85 %. In einer bevorzugten Ausführungsform der Erfindung liegt sie im Bereich von 15 bis 25 %. In einer anderen bevorzugten Ausführungsform der Erfindung liegt die PVK im Bereich von > 40 % bis 60 Gew.-%, z. B. bei etwa 45 Gew.-%. In einer weiteren bevorzugten Ausführungsform der Erfindung ist die PVK > 60 %, vorzugsweise > 70 %, und kann bis zu 85 % betragen.

Typische Pigmente für die erfindungsgemäßen Zubereitungen, insbesondere für Dispersionsfarben, sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Dispersionsputze können auch gröbere Zuschläge, wie Sände oder Sandsteingranulate, enthalten. In Dispersionsfarben werden naturgemäß feinteilige Füllstoffe bevorzugt.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln iv. zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze, Die Dispergiermittel werden in der Regel in einer Menge von 0.1 bis 0.6 Gew.-% bezogen auf das Gesamtgewicht der Dispersionsfarbe eingesetzt.

Ferner umfassen die Hilfsmittel iv gegebenenfalls auch Verdikkungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al, in J. Coatings Techn. Vol 69, No. 867, 1997, S. 73 und von R. D. Hester et al. J. Coatings Technology, Vol. 69, No. 864, 1997, 109 beschrieben sind und auf deren Offenbarung hiermit in vollem Umfang Bezug genommen wird.

Beispiele für hydrophob modifizierte Polyetherurethane sind Polymere der allgemeinen Formel II

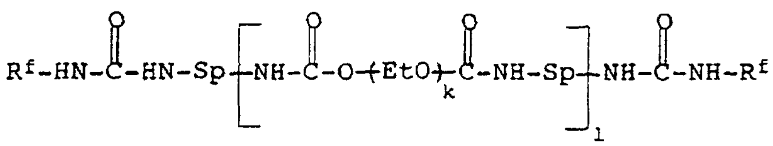

(II)

worin $R^f$ für einen hydrophoben Rest, vorzugsweise einen linearen oder verzweigten Alkylrest mit 10 bis 20 Kohlenstoffatomen, Et für 1,2-Ethylen steht, Sp für $C_2$-$C_{10}$-Alkylen, Cycloalkylen oder Arylen steht, k für eine Zahl im Bereich von 50 bis 1 000 und 1 für eine Zahl im Bereich von 1 bis 10, wobei vorzugsweise das Produkt k x 1 im Bereich von 300 bis 1 000 liegt. Die Dispergier- bzw. Netzmittel werden in der Regel in einer Menge von 0,1 bis 0,6 Gew.-%, bezogen auf das Gesamtgewicht der Disperspionsfarbe, eingesetzt.

Auch anorganische Verdickungsmittel, z. B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereii tung, verwendet. Ferner umfassen die Hilfsmittel iv in der Regel auch Entschäumer, Konservierungs- oder Hydrophobiermittel, Biozide, Fasern oder weitere Bestandteile.

Auch können die Beschichtungsmassen zur Einstellung der Filmbil-deeigenschaften der Bindemittelpolymerisate, sog. Filmbildekonsolidierungsmittel (Weichmacher), z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicarbonsäuren, z. B. Texanol® der Eastman, oder technische Gemische von Dibutylestern der Bernsteinsäure, Glutarsäure und Adipinsäure enthalten. Filmbildehilfsmittel werden üblicherweise in Mengen von 0,1 bis 20 Gew.-%, bezogen auf das in der Zubereitung enthaltene Copolymer P, eingesetzt, so dass die Zubereitung eine Mindestfilmbildetemperatur < 15 °C und vorzugsweise im Bereich von 0 bis 10 °C aufweist.

Häufig unterscheidet man zwischen lösungsmittelhaltigen und lösungsmittelfreien Farben. Lösungsmittelhaltige Farben werden vorzugsweise im Außenbereich eingesetzt, wohingegen lösungsmittelfreie Farben bevorzugt im Innenbereich verwendet werden. Typische lösungsmittelhaltige Farben enthalten als Filmbildehilfsmittel neben den obengenannten Filmbildehilfsmittel Kohlenwasserstoffe bzw. deren Gemische, mit oder ohne aromatische Bestandteile, z. B. Testbenzine des Siedebereichs 140 bis 210 °C. Die Copolymere P weisen in lösungsmittelhaltigen Zubereitungen häufig eine Glasübergangstemperatur $T_G \geq 5$ °C und vorzugsweise < 30 °C auf. In Lösungsmittelfreien Farben ist die Glasübergangstemperatur vorzugsweise ≤ 10 °C.

Ferner können die erfindungsgemäß zur Anwendung kommenden Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A-38 27 975 und der EP-A-417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A-39 01 073, wenn das Copolymer P Carbonylgruppen enthaltende Monomere einpolymerisiert enthält.

Die erfindungsgemäßen Zubereitungen sind stabile fluide Systeme, die man zur Beschichtung von einer Vielzahl von Substraten verwenden kann. Danach betrifft die vorliegende Erfindung auch ein Verfahren zum Beschichten von Substraten. Geeignete Substrate sind beispielsweise Holz, Beton, Metall, Glas, Keramiken, Plastik, Putze, Tapeten, gestrichene, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von Viskosität und Pigmentgehalt der Zubereitung sowie dem Substrat mittels Rollen, Bürsten, Rakeln oder als Spray erfolgen.

Die unter Verwendung der erfindungsgemäßen Zubereitungen hergestellten Beschichtungen zeichnen sich durch eine hohe Nassabriebfestigkeit und eine gute Haftung bei Einwirkung von Feuchtigkeit, d.h. in nassem bzw. gequollenem Zustand aus. Eine verbesserte Nassabriebfestigkeit, d. h. eine verbesserte mechanische Stabilität der Beschichtungen gegenüber abrasiven Einflüssen im feuchten Zustand ist für die Witterungsstabilität und die Nassreinigungsbeständigkeit der Beschichtungen günstig und bewirkt somit, dass die Beschichtungen abwaschbar sind. Darüber hinaus sind die Beschichtungen nicht klebrig und zeichnen sich durch eine hohe Blockfestigkeit aus.

Die vorteilhaften Eigenschaften des Copolymers P als Bindemittel gegenüber Bindemittelpolymerisaten aus dem Stand der Technik, insbesondere die verbesserte Nassabriebfestigkeit, macht sich sowohl bei pigmenthaltigen Zubereitungen mit einer PVK < 40 % bemerkbar als auch bei Zubereitungen mit einer PVK > 40 % oder einer PVK > 60 %. Besonders deutlich werden die erfindungsgemäßen Vorteile, wenn die Zubereitungen eine PVK > 40 % und bis zu 85 % aufweisen, z. B. eine PVK von etwa 45 % oder eine PVK von 70 bis 80 %. Demnach betrifft die vorliegende Erfindung auch die Verwendung der Copolymere P zur Verbesserung der Nassabriebfestigkeit von pigmenthaltigen Zubereitungen.

Die im Folgenden aufgeführten Beispiele sollen die Erfindung verdeutlichen, ohne sie jedoch einzuschränken.

I. Herstellung und Charakterisierung der Polymerisatdispersionen (Copolymere P)

Die mittlere Teilchengröße (z-Mittelwert) der Polymerisatteilchen wurde durch dynamische Lichtstreuung (Photonenkorrelationsspektroskopie) an einer 0,01 gew.-%igen Dispersion in Wasser bei 23 °C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Mindestfilmbildetemperatur (MFT) der Polymerisatdispersionen erfolgte in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet. Anhand des bekannten Temperaturprofils der Platte wird die MFT visuell bestimmt.

1. Vergleichsdispersion VD1

In einen Reaktor wurden 234 g entionisiertes Wasser, 38 g wässrige Natriumpyrophosphatlösung (5 gew.-%ig) und 4,61 g eines Polystyrolsaatlatex (Teilchengröße etwa 30 nm, Feststoffgehalt etwa 33 Gew.-%) vorgelegt. Unter Stickstoffatmosphäre wurde auf 85 °C erwärmt. Anschließend gab man 7,24 g wässrige Initiatorlösung zu. Danach gab man eine Monomeremulsion innerhalb von 3 Stunden und die verbleibende Initiatorlösung innerhalb von 4 Stunden zu. Nach Beendigung der Initiatorzugabe hielt man die Temperatur 1 Stunde bei und kühlte dann auf 60 °C ab. Danach gab man 6,36 g einer 15 gew.-%igen, wässrigen tert.-Butylhydroperoxidlösung und 7,25 g einer wässrigen, 13,1 gew.-%igen Acetonbisulfitlösung über getrennte Zuläufe in den Reaktor. Man behielt die 60 °C 1 Stunde bei. Anschließend kühlte man auf Raumtemperatur und stellte den pH-Wert mit 10 gew.-%iger Natronlauge auf 7,4 ein. Die erhaltene Dispersion war frei von Koagulat und wies einen Feststoffgehalt von 60,1 Gew.-% auf. Der gewichtsmittlere Teilchendurchmesser des Polymerisats lag bei 270 nm. Die MFT lag bei 6 °C.

| | |
|---|---|
| Initiatorlösung: | 2,38 g Natriumperoxodisulfat |
| | 70,00 g entionisiertes Wasser |
| Monomeremulsion: | 227,73 g entionisiertes Wasser |
| | 21,11 g Emulgatorlösung 1 |

47,50 g Emulgatorlösung 2
356,25 g Methylmethacrylat
502,55 g n-Butylacrylat
19,00 g Methacrylsäure
72,20 g einer 25 gew.-%igen Lösung
von N-(Methacryloxyethyl)imidazolidin-2-on in Methylmethacrylat

Emulgatorlösung 1: 45 gew.-%ige Lösung von (Dodecylsulfonylphenoxy)benzolsulfonsäurenatriumsalz (Dowfax® 2A1 der Dow Chemicals) in Wasser

Emulgatorlösung 2: 30 gew.-%ige Lösung des Natriumsalzes eines Schwefelsäurehalbestergemisches von $C_{10}$-$C_{16}$-Alkyl-Ethoxylaten (mittlerer EO-Grad 30) in Wasser (Disponil® FES 77 der Henkel KGaA).

2. Vergleichsdispersion VD2

In der für VD1 beschriebenen Weise wurde mit geänderter Monomerzusammensetzung eine Vergleichsdispersion VD2 hergestellt. Die Vorlage enthielt anstelle des Polystyrol-Saatlatex 19 g Acrylat-Latex (50 gew.-%ig, $d_{50}$ = 130 nm). Im Anschluss an die Polymerisationsreaktion wurde der pH-Wert mit 10 gew.-%iger Natronlauge auf einen Wert von 7,0 eingestellt. Die erhaltene Dispersion war frei von Koagulat und wies einen Feststoffgehalt von 58,7 Gew.-% auf. Der mittlere Teilchendurchmesser der Polymerisatteilchen lag bei 235 nm. Die MFT lag bei 4 °C.

Monomeremulsion:
226,41 g Wasser
21,11 g Emulgatorlösung 1
47,50 g Emulgatorlösung 2
356,25 g Methylmethacrylat
502,55 g n-Butylacrylat
19,00 g Itaconsäure
72,20 g einer 25 gew.-%igen Lösung von N-(Methacryloxyethyl)imidazolidin-2-on in Methylmethacrylat.

3. Vergleichsdispersion VD3

In einen Reaktor wurden 175 g entionisiertes Wasser, 38 g wässrige Natriumpyrophosphatlösung (5 gew.-%ig) und 3,80 g eines Polystyrolsaatlatex (Teilchengröße etwa 30 nm, Feststoffgehalt etwa 5 Gew.-%) vorgelegt. Unter Stickstoffatmosphäre wurde auf 85 °C erwärmt. Anschließend gab man 7,24 g wässrige Initiatorlösung zu. Danach gab man eine Monomeremulsion innerhalb von 3 Stunden und die verbleibende Initiatorlösung innerhalb von 4 Stunden zu. Nach Beendigung der Initiatorzugabe hielt man die Temperatur 1 Stunde bei und kühlte dann auf 60 °C ab. Danach gab man 1,36 g einer 15 gew.- %igen, wässrigen tert.-Butylhydroperoxidlösung und 7,25 g einer wässrigen, 13,1 gew.-%igen Acetonbisulfitlösung über getrennte Zuläufe in den Reaktor. Man behielt die 60 °C 1 Stunde bei. Anschließend stellte man mit 10 gew.-%iger Natronlauge pH 8,5 ein. Die erhaltene Dispersion war frei von Koagulat und wies einen Feststoffgehalt von 52,8 Gew.-% auf. Der gewichtsmittlere Teilchendurchmesser lag bei 280 nm, die MFT bei 2 °C.

Initiatorlösung:
2,38 g Natriumperoxodisulfat
70,00 g entionisiertes Wasser

Monomeremulsion:
379,15 g entionisiertes Wasser
63,33 g Emulgatorlösung 3
118,75 g Emulgatorlösung 4
391,88 g Methylmethacrylat
513,00 g n-Butylacrylat
19,00 g Itaconsäure
38,00 g einer 25 gew.-%ige Lösung von N-(Methacryloxyethyl)imidazolidin-2-on in Methylmethacrylat.

Emulgatorlösung 3: 15 gew.-%ige Lösung des Natriumsalzes der Dodecylbenzolsulfonsäure in Wasser

Emulgatorlösung 4: 20 gew.-%ige Lösung eines ethoxilierten $C_{16}$-$C_{18}$-Fettalkohols (18 EO-Einheiten)

4. Vergleichsdispersion VD4

In einem Polymerisationsreaktor legte man 235 g entionisiertes Wasser und 3,8 g Polystyrol-Saatlatex (5 gew.-%ig, $d_{50}$ = 30 nm) vor, spülte mit Stickstoff und erwärmte auf 85 °C. Dann gab man 7,24 g wässrige Initiatorlösung zu. Anschließend gab man unter Beibehaltung der 85 °C innerhalb 3 h die Monomeremulsion I und innerhalb 4 h die Initiatorlösung zu. Nach Beendigung der Zugabe der Monomeremulsion I gab man die Monomeremulsion II innerhalb 1 h in den Reaktor. Nach Beendigung der Initiator- und Monomerzugabe hielt man die 85 °C eine weitere Stunde bei und kühlte dann auf 60 °C ab. Dann gab man bei 60 °C 1,36 g einer 15 gew.-%igen, wässrigen tert.-Butylhydroperoxidlösung und 7,25 g einer 13,1 gew.-%igen, wässrigen Aceton-Bisulfit-Lösung über getrennte Zuläufe in den Reaktor und behielt die 60 °C 1 Stunde bei. Anschließend kühlte man auf Raumtemperatur ab und stellte mit 10 gew.-%iger Natronlauge pH 8,5 ein. Die Dispersion war koagulatfrei und hatte einen Feststoffgehalt von 63,9 Gew.-%. Der mittlere Polymerteilchendurchmesser lag bei 270 nm, die Mindestfilmbildetemperatur der Dispersion betrug 13 °C.

| | |
|---|---|
| Initiatorlösung: | 2,38 g Natriumperoxodisulfat |
| | 70,00 g entionisiertes Wasser |
| Monomeremulsion I: | 47,84 g entionisiertes Wasser |
| | 66,50 g Emulgatorlösung 3 (s. VD3) |
| | 66,50 g Emulgatorlösung 4 (s. VD3) |
| | 14,25 g 10 gew.-%ige Natronlauge |
| | 332,03 g Methylmethacrylat |
| | 312,55 g n-Butylacrylat |
| | 4,75 g Acrylsäure |
| | 9,75 g einer 25 gew.-%igen Lösung von N-(Methacryloxyethyl)imidazolidin-2-on in Methylmethacrylat |
| Monomeremulsion II: | 16,98 g entionisiertes Wasser |
| | 28,50 g Emulgatorlösung 3 |
| | 28,50 g Emulgatorlösung 4 |
| | 108,20 g Methylmethacrylat |
| | 140,41 g n-Butylacrylat |
| | 2,38 g Acrylsäure |
| | 28,50 g einer 25 gew.-%igen Lösung von N-(Methacryloxyethyl)imidazolidin-2-on in Methylmethacrylat |

5. Vergleichsdispersion VD5

Analog zu der Herstellung von VD4 stellte man VD5 her mit dem Unterschied, dass die Acrylsäure durch gleiche Mengen Methacrylsäure ersetzt wurde. Im Anschluss an die Polymerisation wurde der pH-Wert auf 8,6 eingestellt. Die Dispersion war koagulatfrei und wies einen Feststoffgehalt von 62,8 Gew.-% auf. Der gewichtsmittlere Polymerteilchendurchmesser lag bei 272 nm, die Mindestfilmbildetemperatur betrug 10 °C.

6. Dispersion D1 (erfindungsgemäß)

Analog zur Herstellung der Vergleichsdispersion VD3 wurde die erfindungsgemäße Dispersion D1 hergestellt. Die Monomeremulsion wies folgende Zusammensetzung auf:

117,74 g entionisiertes Wasser
63,33 g Emulgatorlösung 3
118,75 g Emulgatorlösung 4
391,88 g Methylmethacrylat
513,00 g n-Butylacrylat
9,50 g Itaconsäure
38,00 g einer 25 gew.-%igen Lösung von N-(Methacryloxyethyl)imidazolidin-2-on in Methylmethacrylat

Die Dispersion wurde im Anschluß an die Herstellung mit 10 gew.-%iger Natronlauge auf pH 8,7 eingestellt. Die erhaltene Dispersion war koagulatfrei und wies einen Feststoffgehalt von 62,8 Gew.-% auf. Der gewichtsmittlere Polymerteilchendurchmesser lag bei 311 nm, die MFT bei 4,0 °C.

7. Dispersion D2

Analog zur Herstellung der Vergleichsdispersion VD2 wurde die erfindungsgemäße Dispersion D2 hergestellt.
Die Monomeremulsion wies folgende Zusammensetzung auf:

230,96 g entionisiertes Wasser
21,11 g Emulgatorlösung 1 (siehe VD1)
47,50 g Emulgatorlösung 2 (siehe VD1)
356,25 g Methylmethacrylat
502,55 g n-Butylacrylat
9,50 g Itaconsäure
72,20 g 25 gew.-%ige Lösung von N-(Methacryloxyethyl)imidazolidin-2-on in Methylmethacrylat

Im Anschluss an die Polymerisation neutralisierte man mit 10 gew.-%iger Natronlauge auf pH 7,0. Die erhaltene Dispersion war nahezu koagulatfrei und wies einen Feststoffgehalt von 58,7 Gew.-% auf. Der mittlere Polymerteilchendurchmesser lag bei 235 nm, die MFT betrug 4,0 °C.

8. Dispersion D3

Analog zur Herstellung der Vergleichsdispersion VD3 stellte man die erfindungsgemäße Dispersion D3 her. Die Monomeremulsion wies folgende Zusammensetzung auf:

92,62 g entionisiertes Wasser
63,33 g Emulgatorlösung 3 (siehe VD3)
118,75 g Emulgatorlösung 4 (siehe VD3)
391,88 g Methylmethacrylat
513,00 g n-Butylacrylat
7,13 g Itaconsäure
38,00 g einer 25 gew.-%igen Lösung von N-(Methacryloxyethyl)imidazolin-2-on in Methylmethacrylat

Die Dispersion wurde mit 10 gew.-%iger Natronlauge auf pH 9,5 neutralisiert. Die so erhaltene Dispersion war koagulatfrei und wies einen Feststoffgehalt von 64,9 Gew.-% auf. Der mittlere Polymerteilchendurchmesser lag bei 285 nm, die MFT betrug 2,0 °C.

9. Dispersion D4

Analog zur Herstellung der Vergleichsdispersion VD4 wurde die erfindungsgemäße Dispersion D4 hergestellt.

| | |
|---|---|
| Monomeremulsion I: | 47,84 g entionisiertes Wasser |
| | 66,50 g Emulgatorlösung 3 (s. VD3) |
| | 66,50 g Emulgatorlösung 4 (s. VD3) |
| | 14,25 g 10 gew.-%ige Natronlauge |
| | 332,03 g Methylmethacrylat |
| | 312,55 g n-Butylacrylat |
| | 4,75 g Itaconsäure |
| | 9,50 g einer 25 gew.-%igen Lösung von N-(Methacryloxyethyl)imidazolin-2-on in Methylmethacrylat |
| Monomeremulsion II: | 16,98 g entionisiertes Wasser |
| | 28,50 g Emulgatorlösung 3 |
| | 28,50 g Emulgatorlösung 4 |
| | 108,02 g Methylmethacrylat |
| | 140,41 g n-Butylacrylat |
| | 2,38 g Itaconsäure |
| | 28,50 g einer 25 gew.-%igen Lösung von N-(Methacryloxyethyl)imidazolin-2-on in Methylmethacrylat |

10. Dispersion D5

Analog zur Herstellung der Dispersion D4 wurde die erfindungsgemäße Dispersion D5 hergestellt. Im Unterschied zur Herstellung von D4 wurde in der Monomeremulsion II die Itaconsäure vollständig durch Acrylsäure ersetzt. Die MFT der Dispersion lag bei 10 °C.

11. Vergleichsdispersionen VD6, VD7 und Dispersion D6

In einem Polymerisationsreaktor legte man 200 g entionisiertes Wasser, 0,1 g Ameisensäure, 7,5 g Emulgatorlösung 4 (siehe VD3), 1,5 g Stearylalkohol und 40 g Monomeremulsion vor und erwärmte unter Stickstoffatmosphäre auf 85 °C. Dann gab man bei 85 °C 10 g Initiatorlösung in den Polymerisationsreaktor. 15 min nach der Initiatorzugabe gab man zeitgleich beginnend über getrennte Zuläufe den Rest der Monomeremulsion innerhalb 120 min und den Rest der Initiatorlösung innerhalb 135 min in den Polymerisationsreaktor, wobei man die 85 °C beibehielt. Nach Beendigung der Initiatorzugabe hielt man die 85 °C weitere 2 h bei, kühlte auf 70 °C ab und gab dann 0,71 g einer wässrigen, 70 gew.-%igen tert.-Butylhydroperoxid-Lösung in den Polymerisationsreaktor. Hierzu dosierte man innerhalb 30 min bei 70 °C 5 g einer 10 gew.-%igen Lösung der Hydroxymethansulfinsäure als Natriumsalz in Wasser. Anschließend kühlte man die Dispersion auf Raumtemperatur, gab 12 g einer 10 gew.-%igen Natronlauge zu und filtrierte über ein Sieb mit einer Maschenweite von 250 µm.

| | |
|---|---|
| Initiatorlösung: | 1,50 g Natriumperoxodisulfat |
| | 100,00 g entionisiertes Wasser |
| Monomeremulsion: | 120,00 g entionisiertes Wasser |
| | 20,00 g Emulgatorlösung 1 (s. VD1) |
| | 80,00 g Emulgatorlösung 4 (s. VD3) |
| | 26,70 g 15 gew.-%ige, wässrige Natriumlaurylsulfat-Lösung |
| | 5,00 g polymerisierbare Säure (Tabelle1) |
| | 1,00 g Mercaptopropyltrimethoxy silan |
| | 15,00 g 50 gew.-%ige, wässrige Acrylamidlösung |
| | 200,00 g Styrol |
| | 300,00 g n-Butylacrylat |

Tabelle 1

| Dispersion | polymerisierbare Säure | FG [Gew.-%] | LD [%] |
|---|---|---|---|
| VD6 | Acrylsäure | 48,9 | 68 |
| VD7 | Methacrylsäure | 49,2 | 72 |
| D6 | Itaconsäure | 49,7 | 73 |

FG =Feststoffgehalt der Dispersion
LD =LD-Wert (relative Lichtdurchlässigkeit einer auf 0,01 Gew.-% verdünnten Probe, Schichtdicke 2,5 cm, gegen Wasser)

12. Dispersionen VD8, VD9 und D7

Analog zur Herstellung der Dispersionen VD6, VD7 und D6 wurden die Dispersionen VD8, VD9 und D7 hergestellt. Die folgenden Komponenten wurden vorgelegt:

200,00 g entionisiertes Wasser
12,50 g Emulgatorlösung 4 (siehe VD3)
5,00 g Emulgatorlösung 1, 20 gew.-%ig (siehe VD1)
37,00 g Monomeremulsion

Die Monomeremulsion wies folgende Zusammensetzung auf:

170,00 g entionisiertes Wasser
35,00 g Emulgatorlösung 1, 20 gew.-%ig (siehe VD1)

25,00 g Emulgatorlösung 4 (siehe VD3)
x g polymerisierbare Säure (siehe Tabelle 2)
y g 50 gew.-%ige, wässrige Acrylamid-Lösung
250,00 g Styrol
250,00 g n-Butylacrylat

Im Anschluss an die Polymerisation neutralisierte man die Dispersion mit 10-%iger Natronlauge auf pH 7,5 und filtrierte durch ein Metallsieb mit einer Maschenweite von 250 µm.

Tabelle 2

| Dispersion | polymersierbare Säure [g] | Acrylamid-Lösung [g] | FG [%] | LD [%] |
|---|---|---|---|---|
| VD8 | Methacrylsäure; 13,5 | 15,0 | 49,1 | 65 |
| VD9 | Acrylsäure 13,5 | 15,0 | 49,9 | 68 |
| D7 | Itaconsäure 5,0 | 0 | 49,2 | 71 |

FG =Feststoffgehalt der Dispersion
LD =LD-Wert (relative Lichtdurchlässigkeit einer auf 0,01 Gew.-% verdünnten Probe, Schichtdicke 2,5 cm, gegen Wasser)

II. Herstellung der erfindungsgemäßen Zubereitungen

1. Dispersionsfarben mit einer PVK von 46,9 %; Formulierung (I) (Vergleichsbeispiele V1 bis V5, Beispiele 1 bis 5)

In einem Gefäß wurden folgende Bestandteile vorgelegt:

105,60 g Wasser
2,00 g Verdicker[1)]
0,80 g 2-Amino-2-methylpropanol mit 5 % Wasser
1,00 g Dispergiermittel[2)]
3,40 g 10 gew.-%-ige, wässrige Tetrakaliumpyrophosphat-Lösung
1,70 g handelsübliches Biozid[3)]
3,40 g handelsüblicher Entschäumer[4)]
10,10 g Propylenglykol und
10,10 g Dipropylenglykol-n-butylether.

Hierzu gab man unter Rühren:

190,10 g Titandioxidpigment[5)]
181,60 g Feldspat[6)] und
50,70 g kalzinierter Kaolin[7)]

Die Bestandteile wurden für 20 Minuten in einem Hochgeschwindigkeitsdispergator vermischt. Anschließend gab man folgende Bestandteile unter Rühren zu:

266,01 g Polymerdispersion aus I)
2,50 g handelsüblicher Entschäumer[4)]
11,80 g handelsüblicher Verdicker[8)]
159,00 g Wasser.

Die anwendungstechnischen Eigenschaften der Dispersionsfarben sind in den Tabellen 3 und 4 zusammen-

1) Hydroxyethylcellulose mit einer Viskosität von 30 Pas (bestimmt als 2%ige Lösung in Wasser bei 25 °C); Natrosol® 250 HR der Hercules GmbH Düsseldorf
2) 30 gew.-%ige wässrige Lösung eines Ammoniumpolyacrylats; Pigmentverteiler A der BASF AG, Ludwigshafen
3) Proxel®GXL der Zeneca GmbH, Frankfurt
4) Foammaster®S der Henkel KGaA, Düsseldorf
5) Kronos®2101 der Kronos, Houston/Texas
6) Minex®4 der Unimin Speciality Minerals Inc. Elco/Illinois, mittlere Korngröße 7,5 µm
7) Icecap® der Burgess Pigment Co., Sandersville, Georgia
8) 20 gew.-%ige Lösung eines assoziativ verdickenden Polyurethans, Acrysol RM 2020 der Rohm and Haas Deutschland GmbH, Frankfurt

gefasst.

2. Lösungsmittelfreie Innenfarbe mit einer PVK von 75 %, Formulierung II (Vergleichsbeispiele V6, V7 und Beispiel 6)

In einem Gefäß wurden folgende Bestandteile vorgelegt:

106,00 g Wasser
1,00 g 20 gew.-%ige Natronlauge
3,00 g 35 gew.-%ige Lösung eines Natriumpolyphosphats in Wasser[22)]
3,00 g Dispergierhilfsmittel[9)]
3,00 g Konservierungsmittel[10)]
4,00 g Entschäumer[11)]
180,00 g 2 gew.-%ige, wässrige Hydroxyethylcellulose-Lösung[1)]

Hierzu gab man unter Rühren:

65,00 g Titandioxid-Pigment[12)]
5,00 g Aluminiumsilikat [13)]
215,00 g Calciumcarbonat, Calcit (ca. 5 µm)[14)]
55,00 g Calciumcarbonat, gefällt, 0,3 µm [15)]
95,00 g Calciumcarbonat, Kreide, 2,4 µm [16)]
65,00 g Talk/Dolomit, 6 µm [17)].

Die Komponenten wurden in einem Dispergator vermischt. Anschließend gab man unter Rühren

130,00 g Dispersion, 50 gew.-ig, und
70,00 g Wasser zu.

Der Feststoffgehalt der Farbe lag bei 57 Gew.-%. Die Pigmentvolumenkonzentration lag bei 75 %. Die anwendungstechnischen Eigenschaften sind in Tabelle 5 zusammengefasst.

3. Lösungsmittelhaltige Innenfarbe mit einer PVK von 81 % Formulierung III (Vergleichsbeispiele V8, V9 und Beispiel 7)

In einem Gefäß wurden folgende Bestandteile vorgelegt:

100,00 g Wasser
2,00 g Dispergierhilfsmittel[2)]
7,00 g wässrige Lösung eines Natriumpolyphosphats [22)]
2,00 g konzentrierte Ammoniak-Lösung
3,00 g Konservierungsmittel[10)]
150,00 g 2 gew.-%ige, wässrige Methylhydroxyethylcel lulose-Lösung[18)]
12,00 g Testbenzin K 60 [19)] und
12,00 g Weichmacher[20)] .

Hierzu gab man unter Rühren:

[22)] Calgon® der BK Ladenburg, Ladenburg
[9)] 35 gew.-%ige wässrige Lösung eines Natriumpolyacrylats; Pigmentverteiler NL der BASF AG, Ludwigshafen
[10)] Parmetol®A23 der Schulke & Mayr GmbH, Norderstedt
[11)] Agitan 280 der Münzing-Chemie GmbH, Heilbronn
[1)] Hydroxyethylcellulose mit einer Viskosität von 30 Pas (bestimmt als 2%ige Lösung in Wasser bei 25 °C); Natrosol® 250 HR der Hercules GmbH Düsseldorf
[12)] Kronos®2043 der Kronos Titan GmbH, Leverkusen
[13)] Aluminium-Silikat P 820 der Degussa AG, Frankfurt
[14)] Calcit, mittlere Teilchengröße 5 µm; Omyacarb 5GU der Omya GmbH, Köln
[15)] Socal P2 der Deutsche Solvay GmbH, Solingen.
[16)] Omya Violette Etikette der Omya GmbH, Köln
[17)] Talk/Dolomit, mittlere Teilchengröße 6 µm; Naiatsch SE-Micro der Luzenac Deutschland GmbH, Düsseldorf
[2)] 30 gew.-%ige wässrige Lösung eines Ammoniumpolyacrylats; Pigmentverteiler A der BASF AG, Ludwigshafen
[18)] MN 20000 GB, Wolff Walsrode GmbH, Walsrode
[19)] Siedebereich 180 - 210 °C, Esso Chemie GmbH, Köln.
[20)] Diisobutylester eines Gemisches aus $C_4$-$C_6$-Dicarbonsäuren, Lusolvan® FBH, BASF AG

71,00 g Titandioxid-Pigment[12)]
12,00 g Aluminiumsilikat[13)]
83,00 g Calciumcarbonat, gefällt, 0,3 µm [15)]
417,00 g Calciumcarbonat, Calcit 5 µm [14)]

Die Komponenten wurden in einem Hochgeschwindigkeitsmischer miteinander vermischt. Dann gab man unter Rühren

4,00 g Netzmittel[21)]
3,00 g Entschäumer[11)]
102,00 g Dispersion (50 gew.-%ig)
20,00 g Wasser zu.

Die PVK der Farbe betrug 81 %. Die Ergebnisse der anwendungstechnischen Prüfung sind in Tabelle 6 zusammengefasst.

III. Bestimmung der anwendungstechnischen Eigenschaften

1. Abriebfestigkeit

Die Bestimmung der Abriebfestigkeit erfolgte für die Formulierung I nach ASTM D 2486 mittels einer "Gardner"-Scheuermaschine und einem standardisierten Scheuermedium (abrasiver Typ SC-2).

Die Dispersionsfarben der Formulierung I wurden mit einem Kastenrakel (Spalthöhe 175 µm, 7 MIL) auf Leneta-Folien aufgebracht. Anschließend wurden die Folien unter Normklima (23 °C, 50 % rel. Luftfeuchtigkeit) in einer Klimakammer 14 Tage getrocknet. Die Trockenschichtdicke lag bei etwa 50 µm.

Für jede Dispersionsfarbe wurde an 3 Folien der Abriebtest durchgeführt. Hierzu wurden in der Mitte der Folie ein 250 µm dicker Blechstreifen unterlegt. Anschließend wurde Scheuerpaste aufgebracht und mit einer Nylonbürste solange gescheuert, bis die Beschichtung an der Stelle, wo das Blech unterlegt war, durchgescheuert war. Angegeben wird die Anzahl von Doppelhüben, die erforderlich ist, um die Beschichtung an einer Stelle vollständig durchzuscheuern. Angegeben ist der Durchschnitt zweier Werte, die weniger als 25 % voneinander abweichen.

Die Dispersionsfarben der Formulierung II wurden in Anlehnung an DIN 53778 Blatt 2 auf ihre Abriebfestigkeit geprüft: Mit Hilfe eines 60 mm breiten Rakels wurde auf eine Leneta-Folie von ca. 430 x 80 mm ein Anstrichfilm aufgetragen. Die Spalthöhe wurde so gewählt, dass eine Trockenschichtdicke von 100 µm resultierte. Der Film wurde 28 Tage unter Normklimabedingungen getrocknet. Dann wurde in einem Scheuergerät unter ständigem Zutropfen einer 0,25%igen wässrigen Lösung von n-Dodecylbenzolsulfonat-Natriumsalz eine Scheuerbürste über den Anstrich geführt. Die Anzahl der Doppelhübe bis zum Durchscheuern des Anstrichs diente als Maß für die Scheuerfestigkeit bzw. Naßabriebfestigkeit.

Die Dispersionsfarben aus III wurden ebenfalls in Anlehnung an DIN 53778 auf ihre Nassabriebfestigkeit geprüft. Abweichend von der zuvor beschriebenen Vorgehensweise wurde die Formulierung in einer Nassschichtdicke von 280 µm aufgetragen. Die Beschichtung wurde 2 Tage bei 50 °C und dann weitere 5 Tage unter Normklimabedingungen getrocknet.

2. Blockfestigkeit

Die Blockfestigkeit wurde gemäß ASTM D 4946 bestimmt. Hierzu brachte man die Dispersionsfarben aus II mit einem Kastenrakel (3 MIL, Spalthöhe 75 µm) auf Leneta-Folien auf. Anschließend trocknete man die Folien 24 Stunden unter Norm-Klimabedingungen. Die getrockneten, beschichteten Folien wurden anschließend in 3,8 x 3,8 cm große Quadrate zerschnitten. Die Quadrate wurden mit den beschichteten Seiten aufeinandergelegt und zwischen zwei Glasplatten plaziert. Auf diese Glasplatten gab man ein Gewicht von 2 kg. Diese Anordnung wurde 24 Stunden bei 50 °C aufbewahrt. Anschließend untersuchte man, wie sich die Folien voneinander entfernen lassen. Hierzu legte man eine Bewertungsskala von 0 bis 10 zugrunde:

0 = 75 bis 100 % Abriss der Beschichtung

[12)] Kronos®2043 der Kronos Titan GmbH, Leverkusen
[13)] Aluminium-Silikat P 820 der Degussa AG, Frankfurt
[15)] Socal P2 der Deutsche Solvay GmbH, Solingen.
[14)] Calcit, mittlere Teilchengröße 5 µm; Omyacarb 5GU der Omya GmbH, Köln
[21)] Lumiten N-OC der BASF AG, 30 gew.-%ige Lösung eines Fettalkoholethoxilats, Trübungspunkt in wässriger Kochsalzlösung 90 °C.
[11)] Agitan 280 der Münzing-Chemie GmbH, Heilbronn

1 = 50 bis 75 % Abriss
2 = 25 bis 50 % Abriss
3 = 5 bis 25 % Abriss
4 = sehr klebrig: 0 bis 5 % Abriss,;
5 = mäßige Klebrigkeit
6 = leichte Klebrigkeit
7 = leichte bis sehr leichte Klebrigkeit
8 = sehr leichte Klebrigkeit
9 = kaum klebrig
10 = nicht klebrig

3. Nasshaftung

Die Nasshaftung wurde wie folgt bestimmt: In einem ersten Schritt wurden die Leneta-Folien mit lösungsmittelhaltigem Alkydharzlack (Glasurit EA, Hochglanzlack der BASF deco GmbH, Köln) mit einem Kastenrakel (Spalthöhe 180 µm) beschichtet. Die Folien wurden 24 Stunden in einer Normklimakammer und anschließend 14 Tage in einem Ofen bei 50 °C getrocknet. Anschließend wurden die Dispersionsfarben aus II mit einem Applikator (Spalthöhe 250 µm, 10 MIL) auf die mit Alkydharz beschichteten Leneta-Folien als zweite Beschichtung aufgebracht. Die so erhaltenen Folien wurden 3 Tage unter Norm-Klimabedingungen getrocknet. Aus jeder Folie wurden 3 Prüfkörper herausgeschnitten. Jeder Prüfkörper wurde horizontal mit einer Rasierklinge angeschnitten. Anschließend führte man einen Frost-Tau-Test durch. Hierzu wässerte man die Prüfkörper und bewahrte sie anschließend in einem Tiefkühlschrank 16 Stunden bei -20 °C auf. Dieser Vorgang wurde noch zweimal wiederholt. Anschließend ließ man die Proben in Wasser auf Raumtemperatur erwärmen. Danach wurde die Haftung der Beschichtung am Anschnitt durch Kratzen mit dem Fingernagel bestimmt. Hierbei legte man eine Bewertungsskala von 0 bis 5 zugrunde, wobei 0 für eine optimale Adhäsion und 5 für keine Adhäsion (fehlerfreies Abziehen) steht. Die Werte 1 bis 4 stehen für Zwischenwerte.

Tabelle 3:

| Anwendungstechnische Prüfung der Formulierung I (einstufige Polymerisate) | | | | | | |
|---|---|---|---|---|---|---|
| Beispiel | Dispersion | Säure[1)] [Gew.-%] | MFT[2)] [°C] | Block festig keit | Nass haftung | Nass abrieb festigkeit |
| V1 | VD1 | MAS; 2 | 6,0 | 10 | 2 | 1200 |
| V2 | VD2 | IS; 2 | 4,0 | 10 | 2 | 1000 |
| V3 | VD3 | IS; 2 | 2,0 | 10 | 3 | 1325 |
| 1 | D1 | IS; 1 | 2,0 | 10 | 2 | 2000 |
| 2 | D2 | IS; 1 | 4,0 | 10 | 3 | 1700 |
| 3 | D3 | IS; 0,75 | 2,0 | 10 | 3 | 2200 |

1) Gew.-%, bezogen auf das Gesamtgewicht des Polymers: AS = Acrylsäure, MAS = Methacrylsäure, IS = Itaconsäure
2) Mindestfilmbildetemperatur

Tabelle 4:

| Anwendungstechnische Prüfung der Formulierung I (zweistufige Polymerisate) | | | | | | |
|---|---|---|---|---|---|---|
| Beispiel | Dispersion | Säure[1)] [Gew.-%] | MFT[2)] [°C] | Block festig keit | Nass haftung | Nass abrieb festigkeit |
| V4 | VD4 | AS; 0,75 | 13,0 | 9 | 3 | 1270 |
| V5 | VD5 | MAS; 0,75 | 10,0 | 10 | 3 | 1330 |
| 4 | D4 | IS; 0,75 | 9,0 | 10 | 3 | 2800 |
| 5 | D5 | IS; 0,5 AS; 0,25 | 12,0 | 10 | 4 | 2200 |

1) Gew.-%, bezogen auf das Gesamtgewicht des Polymers: AS = Acrylsäure, MAS = Methacrylsäure, IS = Itaconsäure
2) Mindestfilmbildetemperatur

Tabelle 5:

| Anwendungstechnische Prüfung der Formulierung II | | | |
|---|---|---|---|
| Beispiel | Dispersion | Säure [Gew.%][1)] | Nassabrieb festigkeit |
| V6 | VD6 | AS; 1 | 2350 |
| V7 | VD7 | MAS; 1 | 2670 |
| 6 | D6 | IS; 1 | 4660 |

1) Gew.-%, bezogen auf das Gesamtgewicht des Polymers: AS = Acrylsäure, MAS = Methacrylsäure, IS = Itaconsäure

Tabelle 6:

| Anwendungstechnische Prüfung der Formulierung III | | | | |
|---|---|---|---|---|
| Beispiel | Dispersion | Säure [Gew.-%][1)] | Amid [Gew.-%][2)] | Nassabrieb festigkeit |
| V8 | VD8 | MAS; 2,6 | AM; 1,4 | 1320 |
| V9 | VD9 | AS; 2,6 | AM; 1,4 | 1336 |
| 7 | D7 | IS; 1,0 | --- | 3113 |

1) Gew.-%, bezogen auf das Gesamtgewicht des Polymers: AS = Acrylsäure, MAS = Methacrylsäure, IS = Itaconsäure

2) Gew.-%, bezogen auf das Gesamtgewicht des Polymers: AM = Acrylamid

**Patentansprüche**

**1.** Dispersionsfarbe, enthaltend

i) ein polymeres Bindemittel, das wenigstens ein Copolymer P aus ethylenisch ungesättigten Monomeren M in Form einer wässrigen Polymerisatdispersion enthält, das eine Glasübergangstemperatur $T_G$ im Bereich von -10 bis +50 °C aufweist, das

a) 0,1 bis 1,5 Gew.-%, bezogen auf das Gesamtgewicht des Copolymeren P, Itaconsäure als saures Monomer M1, deren Salze und/oder deren Anhydrid einpolymerisiert enthält, wobei bis zu 50 Gew.-% der Itaconsäure durch ein anderes Monomer mit wenigstens einer Säuregruppe oder einer neutralisierten Säuregruppe ersetzt sein können,

b) wenigstens 80 Gew.-% Monomere M2, ausgewählt unter vinylaromatischen Monomeren, den Estern ethylenisch ungesättigter $C_3$-$C_8$-Monocarbonsäuren mit $C_1$-$C_{12}$-Alkanolen und den Vinylestern aliphatischer $C_1$-$C_{12}$-Monocarbonsäuren, einpolymerisiert enthält,

und das kein einpolymerisiertes Acrolein enthält,

ii) wenigstens ein anorganisches Pigment,

iii) gegebenenfalls anorganische Füllstoffe und

iv) übliche Hilfsmittel.

**2.** Zubereitung nach Anspruch 1, wobei Itaconsäure alleiniges saures Monomer ist.

**3.** Dispersionsfarbe nach Anspruch 2, worin die Monomere M2 ausgewählt sind unter Methylmethacrylat, Ethylmethacrylat, n-Butylmethacrylat, tert.-Butylmethacrylat, Ethylacrylat, n-Butylacrylat, tert.-Butylacrylat und 2-Ethylhexylacrylat.

**4.** Dispersionsfarbe nach einem der vorhergehenden Ansprüche, worin die Monomere M zusätzlich 0,1 bis 10 Gew.-%, bezogen auf das Gesamtgewicht des Copolymers P, Harnstoffgruppen enthaltende Monomere M3 umfassen.

5. Dispersionsfarbe nach einem der vorhergehenden Ansprüche, worin die wässrige Dispersion des Copolymeren P durch radikalische, wässrige Emulsionspolymerisation der Monomere M nach einem Monomerzulaufverfahren, wobei sich wenigstens 50 Gew.-% und insbesondere die Gesamtmenge der Itaconsäure im Monomerzulauf befindet, erhältlich ist.

6. Dispersionsfarbe nach Anspruch 5, wobei man die radikalische, wässrige Emulsionspolymerisation in wenigstens zwei Polymerisationsstufen durchführt, wobei die Zusammensetzung der in der 1. Stufe zu polymerisierenden Monomere von der Monomermischung der in der 2. Stufe zu polymerisierenden Monomere verschieden ist.

7. Dispersionsfarbe nach einem der vorhergehenden Ansprüche, wobei das Verhältnis von anorganischen Bestandteilen zu Copolymer P durch eine Pigmentvolumenkonzentration PVK > 10 % charakterisiert ist.

8. Verwendung von Itaconsäure enthaltenden Copolymeren P, wie in einem der Ansprüche 1 bis 6 definiert, zur Verbesserung der Nassabriebfestigkeit von polymergebundenen Beschichtungsmassen, insbesondere von Dispersionsfarben.

**Claims**

1. An emulsion paint comprising

i) a polymeric binder which comprises at least one copolymer P of ethylenically unsaturated monomers M in the form of an aqueous polymer dispersion which has a glass transition temperature $T_G$ in the range from -10 to +50°C, and which contains in polymerized form

a) from 0.1 to 1.5% by weight, based on the overall weight of the copolymer P, of itaconic acid as acidic monomer M1, its salts and/or its anhydride, it being possible for up to 50% by weight of the itaconic acid to be replaced by another monomer having at least one acid group or one neutralized acid group,

b) at least 80% by weight of monomers M2, selected from vinylaromatic monomers, the esters of ethylenically unsatured $C_3$-$C_8$-monocarboxylic acids with $C_1$-$C_{12}$-alkanols and the vinyl esters of aliphatic $C_1$-$C_{12}$-monocarboxylic acids,

and which contains no polymerized acrolein,

ii) at least one inorganic pigment,

iii) if desired, inorganic fillers/extenders, and

iv) customary auxiliaries.

2. A formulation as claimed in claim 1, in which itaconic acid is the sole acidic monomer.

3. An emulsion paint as claimed in claim 2, in which the monomers M2 are selected from methyl methacrylate, ethyl methacrylate, n-butyl methacrylate, tert-butyl methacrylate, ethyl acrylate, n-butyl acrylate, tert-butyl acrylate and 2-ethylhexyl acrylate.

4. An emulsion paint as claimed in any one of the preceding claims, in which the monomers M additionally comprise from 0.1 to 10% by weight, based on the overall weight of the copolymer P, of monomers M3 comprising urea groups.

5. An emulsion paint as claimed in any one of the preceding claims, in which the aqueous dispersion of the copolymer P is obtainable by free-radical aqueous emulsion polymerization of the monomers M in accordance with a monomer feed process where at least 50% by weight and in particular all of the itaconic acid is present in the monomer feed.

6. An emulsion paint as claimed in claim 5, in which the free-radical aqueous emulsion polymerization is conducted in at least two polymerization stages, where the composition of the monomers to be polymerized in the 1st stage is different from that of the monomer mixture of the monomers to be polymerized in the 2nd stage.

7. An emulsion paint as claimed in any one of the preceding claims, in which the ratio of inorganic constituents to copolymer P is **characterized by** a pigment volume concentration pvc > 10%.

8. The use of a copolymer P comprising itaconic acid, as defined in any one of claims 1 to 6, for improving the wet abrasion resistance of polymer-bound coating compositions, especially emulsion paints.

## Revendications

1. Peinture à dispersion, contenant

   i) un liant polymère qui contient au moins un copolymère P de monomères M éthyléniques insaturés sous la forme d'une dispersion aqueuse de polymère, présentant une température de transition vitreuse $T_G$ dans une plage de -10°C à +50°C, qui

      a) contient à titre de monomère acide M1 de 0,1 à 1,5% en poids, par rapport au poids total du copolymère P, d'acide itaconique, de ses sels et/ou de ses anhydrides, dans lequel jusqu'à 50% en poids de l'acide itaconique peuvent être remplacés par un autre monomère avec au moins un groupe acide ou un groupe acide neutralisé,
      b) contient au moins 80% en poids de monomère M2, choisi parmi les monomères vinylaromatiques, les esters ethyléniquement insaturés des monoacides carboxyliques en $C_3$-$C_8$ et des alcanols en $C_1$-$C_{12}$ et les esters vinyliques des monoacides carboxyliques aliphatiques en $C_1$-$C_{12}$,
      et qui ne contient pas d'acroléine sous la forme de polymère,

   ii) au moins un pigment inorganique,
   iii) le cas échéant des charges inorganiques et
   iv) les ingrédients auxiliaires usuels.

2. Préparation selon la revendication 1, dans laquelle l'acide itaconique est le monomère acide unique.

3. Peinture à dispersion selon la revendication 2, dans laquelle les monomères M2 sont choisis parmi le méthacrylate de méthyle, le méthacrylate d'éthyle, le méthacrylate de n-butyle, le méthacrylate de tert-butyle, l'acrylate d'éthyle, l'acrylate de n-butyle, l'acrylate de tert-butyle et l'acrylate de 2-éthylhexyle.

4. Peinture à dispersion selon l'une quelconque des revendications précédentes, dans laquelle les monomères M comprennent en outre 0,1% à 10% en poids, par rapport au poids total du copolymère P, de monomères M3 contenant des groupes urées.

5. Peinture à dispersion selon l'une quelconque des revendications précédentes, dans laquelle la dispersion aqueuse des copolymères P peut être obtenue par une polymérisation en émulsion aqueuse radicalaire des monomères M suivant un procédé de flux du monomère entrant, dans lequel au moins 50% en poids et en particulier la totalité de l'acide itaconique se trouve dans le flux du monomère entrant.

6. Peinture à dispersion selon la revendication 5, dans laquelle on réalise la polymérisation en émulsion aqueuse radicalaire au minimum en deux étapes de polymérisation, dans laquelle la composition des monomères à polymériser de la première étape est différente du mélange des monomères à polymériser de la deuxième étape.

7. Peinture à dispersion selon l'une quelconque des revendications précédentes, dans laquelle la proportion de composants inorganiques par rapport au copolymère P est **caractérisée par** une concentration pigmentaire volumique PVK > 10%.

8. Utilisation de copolymères P contenant de l'acide itaconique, comme défini dans l'une des revendications 1 à 6, pour améliorer la résistance à l'abrasion en milieu humide de revêtements avec liant polymère, particulièrement de peintures à dispersion.